# EUROPÄISCHE PATENTSCHRIFT

(11) **EP 2 125 390 B1**
(45) Veröffentlichungstag und Bekanntmachung des Hinweises auf die Patenterteilung: **19.01.2011**
(21) Anmeldenummer: 07847320.4
(22) Anmeldetag: 26.11.2007
(51) Int. Cl.: B60C 11/04

(54) **FAHRZEUGLUFTREIFEN MIT GESCHICHTETEM LAUFSTREIFEN**
VEHICLE TIRES HAVING COATED TREAD
PNEUMATIQUE DE VÉHICULE À BANDE DE ROULEMENT À PLUSIEURS COUCHES

(30) Priorität: 20.01.2007 DE 102007003062
(43) Veröffentlichungstag der Anmeldung: 02.12.2009
(73) Patentinhaber: Continental Reifen Deutschland GmbH, 30165 Hannover (DE)
(72) Erfinder: WEBER, Christian, 30826 Garbsen (DE); ACKERMANN, Lutz, 38539 Müden (DE)
(74) Vertreter: Finger, Karsten
(86) Internationale Anmeldenummer: PCT/EP2007/062779
(87) Internationale Veröffentlichungsnummer: WO 2008/086911

(56) Entgegenhaltungen:
- WO-A-00/53437
- JP-A- 4 306 104
- JP-A- 6 191 221

## Beschreibung

Die Erfindung betrifft einen Fahrzeugluftreifen, insbesondere für Nutzfahrzeuge, mit einem profilierten Laufstreifen, welcher durch eine Anzahl von Umfangsnuten in Profilrippen oder Blockreihen gegliedert ist und welcher einen Hauptteil aus einer ersten Gummimischung sowie zumindest den Nutgrund der Umfangsnuten auskleidende Gummischichten aus einer zweiten Gummimischung aufweist, wobei der Elastizitätsmodul M 100 % der Gummimischung der Gummischichten um 5 % bis 20 % geringer ist als der Elastizitätsmodul M 100 % der Gummimischung des Hauptteils des Laufstreifens.

Ein derartiger Fahrzeugluftreifen ist beispielsweise aus der JP 06 191221 A bekannt. Der Laufstreifen dieses Fahrzeugluftreifens weist eine sogenannte Base-Cap-Groove-Mischungsanordnung auf, wobei die Gummimischung für die Gummischicht, die Groove-Mischung, einen geringeren Elastizitätsmodul aufweist, als die Cap-Mischung. Gemäß den Mischungsbeispielen wird für die Groove-Mischung ein Polymersystem vorgeschlagen, welches sich von den vorgeschlagenen Cap-Mischungen deutlich unterscheidet. Die lediglich in unmittelbarer Nähe zum Nutgrund der Umfangsnuten eingebrachte Gummischicht soll das Entstehen von Einrissen im Bereich des Nutgrundes weitgehend verhindern.

Bei dem aus der WO-A-00/53437 bekannten Fahrzeugluftreifen weisen die Gummischichten, welche die Umfangsnuten auskleiden, einen Elastizitätsmodul bei 10 % Dehnung (gemäß ASTM-Standardtest) auf, welcher zwischen 40 % und 80 % des gleichermaßen ermittelten Elastizitätsmoduls des Hauptteils des Laufstreifen beträgt. Die die Umfangsnuten auskleidenden Gummischichten reichen bis an die Laufstreifenperipherie und sollen dazu beitragen, dass die Spannungsverteilung in Querrichtung der Blöcke bzw. Rippen vergleichmäßigt wird und Spannungskonzentrationen an den in Umfangsrichtung verlaufenden Rippen oder Blockkanten weitgehend vermieden werden. In der EP-A-1 241 026 wird vorgeschlagen, in unmittelbarer Nähe des Nutgrundes der Umfangsnuten jeweils eine Gummischicht einzubringen, die eine besonders hohe Reißdehnung aufweist. Damit soll das Entstehen von Einrissen im Bereich des Nutgrundes der Umfangsnuten unterdrückt bzw. ein Weiterreißen bereits gebildeter Einschnitte verhindert werden.

Auch die DE-B-1 194 721 befasst sich mit dem Vermeiden von Rissbildungen in den Umfangsnuten eines Laufstreifens. Die Umfangsnuten sind mit einer Gummischicht mit einer hohen Ein- und Weiterreißfestigkeit ausgekleidet, welche derart ausgeführt wird, dass ihre Dicke vom Rillengrund zu den Rillenflanken hin abnimmt.

Um das Entstehen von Rissen am Nutgrund von Umfangsnuten zu vermeiden, ist es sinnvoll, lediglich den Nutgrund mit einer Gummischicht auszukleiden, die nicht oder kaum zum Einreißen neigt. In der Praxis hat es sich jedoch als sehr schwierig bis unmöglich herausgestellt, diese Gummischicht nur im Nutgrund anzubringen, Teile der eingebrachten Mischung reichen zumindest in die Nutflanken, meist sogar bis an die Laufstreifenoberfläche. Dadurch befindet sich diese Mischung in einem Bereich des Laufstreifens, welcher Abrieb unterliegt.

Der Erfindung liegt die Aufgabe zu Grunde, bei einem Reifen der eingangs genannten Art sicherzustellen, dass die Gummischichten das Entstehen von Einrissen am Nutgrund von Umfangsnuten zumindest weitgehend verhindern und ein Abriebsverhalten zeigen, welches jenem der Gummimischung des Hauptteils des Laufstreifens gleichkommt.

Gelöst wird die gestellte Aufgabe erfindungsgemäß dadurch, dass die Gummimischung der Gummischichten und die Gummimischung des Hauptteils auf einem weitgehend übereinstimmenden oder vergleichbaren Polymersystem basieren und ein weitgehend übereinstimmendes oder vergleichbares Füllstoffsystem aufweisen.

Es hat sich herausgestellt, dass bereits ein Unterschied von 5 % im Modul M 100 % ausreicht, die dynamische Ermüdung der Gummischichten in den Umfangsnuten soweit herabzusetzen, dass die Anzahl der Risse am Nutgrund während der Lebensdauer des Reifens deutlich reduziert wird. Der nur geringfügig niedrigere Modul der Gummischichten sorgt gemeinsam mit der Maßnahme, für diese Gummimischung und die Gummimischung des Hauptteils des Laufstreifens in ihren Eigenschaften ähnliche aber weitgehend übereinstimmende Polymersysteme und Füllstoffsysteme zu verwenden, dafür, dass der Abrieb des Laufstreifens selbst dort, wo die unterschiedlichen Gummimischungen in Kontakt mit dem Untergrund treten, gleichmäßig ist.

Gemäß einer bevorzugten Ausführungsform der Erfindung ist der Modul M 100 % der Gummimischung der Gummischichten um 10 % bis 15 % geringer als jener der Gummimischung des Hauptteils des Laufstreifens. Gerade bei dieser Ausführung ist eine besonders deutliche Reduktion der Anzahl der Risse am Nutgrund feststellbar. während die Abriebsleistungen der beiden Gummimischungen noch auf einem Niveau liegen.

Die Gummimischung für die Gummischichten und die Gummimischung für den Hauptteil basieren insbesondere auf einen oder mehreren der Kautschuke SBR, BR, NR/IR, wobei die Anteile an diesen Kautschuken in der einen Gummimischung sich von den Anteilen an diesen Kautschuken in der anderen Gummimischung pro eingesetztem Kautschuk um höchstens 6 phr unterscheidet.

Der Anteil an Ruß und/oder Silika in der Gummimischung der Gummischichten weicht vom Anteil an Ruß und/oder Silika in der Gummimischung des Hauptteils pro eingesetztem Füllstoff ebenfalls um höchstens 6 phr ab. Bei Abweichungen in diesen Größenordnungen sind die Polymersysteme und Füllstoffsysteme derart ähnlich, dass sich die Mischungen bezüglich ihres Abriebsverhaltens kaum oder gar nicht unterscheiden. Dabei kann alternativ oder zusätzlich vorgesehen sein, dass sich die Füllstoffe Ruß und/oder Silika in der Gummimischung der Gummischichten von jenen in der Gummimischung des Hauptteils in ihrer DBP-Zahl (Dibutylphthalat-Zahl) oder Jodabsorptionszahl um maximal 15 % unterscheiden.

Die Gummischichten werden ferner derart ausgeführt, dass sie am Nutgrund eine maximale Stärke von 4 mm, an den Nutflanken eine maximale Stärke von 6 mm aufweisen.

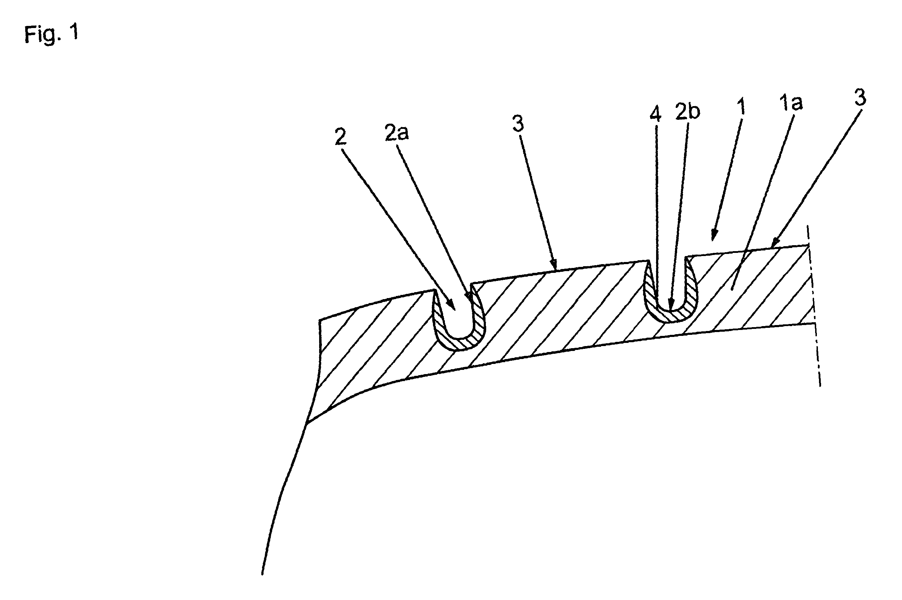

Weitere Merkmale, Vorteile und Einzelheiten der Erfindung werden anhand der Zeichnung, die ein Ausführungsbeispiel darstellt, näher beschrieben. Die einzige Zeichnungsfigur, Fig. 1, zeigt einen Querschnitt durch den Laufstreifen eines Fahrzeugluftreifens mit einer Ausführungsform der Erfindung.

Fig. 1 zeigt einen Querschnitt durch den Laufstreifen eines Fahrzeugluftreifens, welcher ein LKW-Reifen in Radialbauart ist und ansonsten herkömmlich aufgebaut sein kann, insbesondere eine luftdichte Innenschicht, eine Radialkarkasse, die um Wulstkerne und Wulstbereiche geführt ist, einen mehrlagigen Gürtelverband und Seitenwände aufweist. Radial innerhalb des dargestellten Laufstreifens 1 befindet sich die radial äußerste Gürtellage. Der Laufstreifen 1 ist durch breite Umfangsnuten 2, welche beispielsweise als gerade oder zick-zackförmig in Umfangsrichtung umlaufende Nuten ausgeführt sein können, in Profilrippen oder Blockreihen 3 gegliedert. Profilrippen sind üblicherweise durch Einschnitte, gegebenenfalls durch sacknutartig endende Rillen strukturiert, Blockreihen bestehen aus einer Aneinanderreihung von Profilblöcken, welche in Umfangsrichtung voneinander durch Querrillen getrennt sind.

Die Umfangsnuten 2 sind durch zwei einander gegenüberliegende Seitenflanken 2a und einen diese verbindenden, bei der dargestellten Ausführungsform etwa U-förmig gerundeten Nutgrund 2b begrenzt, wobei die Übergänge zwischen dem Nutgrund 2b und den Flanken 2a fließend sind. Eine separate Gummischicht 4 bildet bzw. umschließt zumindest den Nutgrund 2b. Bei der dargestellten Ausführungsform reicht die Gummischicht 4 in radialer Richtung zumindest über einen Teil der Erstreckung der Seitenflanken 2b. Die Gummischichten 4 weisen am Nutgrund 2b eine Stärke zwischen 2 mm und 4 mm, an den Nutflanken 2a von bis zu 6 mm auf und sind entweder über ihre Erstreckung konstant oder im Wesentlichen konstant dick oder derart ausgeführt, dass ihre Dicke entlang der Seitenflanken 2a in Richtung zur Laufstreifenoberseite geringer wird. Es ist auch möglich, die Gummimischungen 4 derart auszuführen und anzuordnen, dass sie bis an die Laufstreifenperipherie reichen.

Der Laufstreifen 1 besteht daher aus einem Hauptteil 1a aus einer ersten Gummimischung und aus die Umfangsnuten 2 zumindest im Bereich des Nutgrundes 2b auskleidenden Gummischichten 4 aus einer zweiten Gummimischung. Die Gummimischung für die Gummischichten 4 ist derart ausgelegt, dass ihr Modul M 100 % (bei 100 % Dehnung, ermittelt gemäß DIN 53504) zwischen 5 % und 20 % geringer ist als der Modul M 100 % der Gummimischung des Hauptteils 1a des Laufstreifens 1. Der Unterschied beträgt insbesondere 10 % bis 15 %. Die Gummimischung der Gummischichten 4 weist daher gegenüber der Gummimischung für den Hauptteil 1 a eine geringere dynamische Ermüdung auf. Damit wird in den Umfangsnuten 2 das Auftreten von Rissen am Profilgrund unterbunden oder zumindest auf einen wesentlich späteren Zeitpunkt verschoben bzw. in der auftretenden Intensität deutlich reduziert.

Da es sehr schwierig ist, die Gummischichten 4 nur im Bereich des Nutgrundes 2b der Umfangsnuten 2 vorzusehen bzw. anzubringen, lässt es sich in der Praxis nicht vermeiden, dass die Gummischichten 4 auch die Seitenflanken 2a bedecken. Damit kommt die Gummimischung der Gummischichten 4 in einen Bereich, mit dem der Reifen während des Laufstreifenantriebes mit dem Untergrund in Kontakt kommt. Die Mischung für die Gummischichten 4 und die Gummimischung für den Hauptteil 1a des Laufstreifens 1 sollten sich daher in ihrem Abriebsverhalten idealerweise nicht oder nur unmerklich unterscheiden, da ansonsten ein unregelmäßiger Abrieb nicht vermeidbar ist, was letztendlich zu einer reduzierten Laufleistung des Reifens führen würde. Damit die Gummimischungen ein möglichst ähnliches Abriebsverhalten besitzen, werden für die Gummimischung der Gummischichten 4 und für die Gummimischung des Hauptteils 1a des Laufstreifens 1 weitgehend übereinstimmende Polymersysteme verwendet. Auch die Anteile an Füllstoffen und die Typen der eingesetzten Füllstoffe sollten sich möglichst wenig unterscheiden. Der geringere Modul der Mischung für die Gummischichten 4 wird daher bevorzugt dadurch erreicht, dass diese Mischung durch eine Reduzierung der Schwefel-und/oder Beschleunigermenge weniger vernetzt ist als die Gummimischung des Hauptteils 1a. Zusätzlich kann die Gummimischung für die Gummischichten 4 einen Ruß geringer Aktivität und/oder einen etwas geringeren Anteil an Füllstoffen (Ruß und/oder Silika) enthalten als die Mischung des Hauptteils 1a des Laufstreifens 1. Die nachstehende Tabelle 1 zeigt beispielhaft eine Gummimischung für den Hauptteil 1a und eine Gummimischung für die Gummischichten 4:

**Tabelle 1**

| | Gummimischung | Gummimischung |
|---|---|---|
| | Hauptteil 1a | Gummischichten 4 |
| Kautschuk [phr] | 100 | 100 |
| Füllstoff [phr] | 50 | 50 |
| Schwefel [phr] | 1.2 | 1.0 |
| Beschleuniger [phr] | 0.9 | 0.75 |

Die Mischungen enthalten ansonsten die üblichen weiteren Zusätze wie Zinkoxid und Prozesshilfsmittel in den jeweils üblichen Mengen.

Sowohl die Gummimischung für die Gummischichten 4 als auch die Gummimischung für den Hauptteil 1 a des Laufstreifens 1 enthält bevorzugt eine der Kautschuke SBR, BR oder NR/IR. Wie bereits erwähnt, sind die Polymersysteme für diese beiden Gummimischungen weitgehend übereinstimmend. Die Anteile an diesen Kautschuken in der einen Gummimischung weicht daher vom Anteil an diesen Kautschuken in der anderen Gummimischung pro Kautschuk um höchstens 6 phr ab. Auch für die Anteile an den Füllstoffen Ruß und/oder Silika gilt, dass der Anteil an Ruß und/oder Silika in der Gummimischung der Gummischichten 4 vom Anteil an Ruß und/oder Silika in der Gummimischung des Hauptteils 1a für jeden Füllstoff um höchstens 6 phr abweicht. Alternativ oder zusätzlich können sich diese Füllstoffe in den Gummischichten auch in ihrer DBP-Zahl (Dibutylphthalat-Zahl) oder ihrer Jodabsorptionszahl um maximal 15 % unterscheiden.

## Patentansprüche

1. Fahrzeugluftreifen, insbesondere für Nutzfahrzeuge, mit einem profilierten Laufstreifen (1), welcher durch eine Anzahl von Umfangsnuten (2) in Profilrippen oder Blockreihen (3) gegliedert ist und welcher einen Hauptteil (1a) aus einer ersten Gummimischung sowie zumindest den Nutgrund (2b) der Umfangsnuten (2) auskleidende Gummischichten (4) aus einer zweiten Gummimischung aufweist, wobei der Elastizitätsmodul M 100 % der Gummimischung der Gummischichten (4) um 5 % bis 20 % geringer ist als der Elastizitätsmodul M 100 % der Gummimischung des Hauptteils (1a) des Laufstreifens (1),
**dadurch gekennzeichnet,**
**dass** die Gummimischung der Gummischichten (4) und die Gummimischung des Hauptteils (1a) auf einem weitgehend übereinstimmenden oder vergleichbaren Polymersystem basieren und ein weitgehend übereinstimmendes oder vergleichbares Füllstoffsystem aufweisen.

2. Fahrzeugluftreifen nach Anspruch 1, **dadurch gekennzeichnet, dass** der Modul M 100 % der Gummimischung der Gummischichten (4) um 10 bis 15 % geringer ist als jener der Gummimischung des Hauptteils (1a) des Laufstreifens (1).

3. Fahrzeugluftreifen nach Anspruch 1 oder 2, **dadurch gekennzeichnet, dass** die Gummimischung für die Gummischichten (4) und die Gummimischung für den Hauptteil (1a) auf einem oder mehreren der Kautschuke SBR, BR, NR/IR basieren und die Anteile an diesen Kautschuken in der einen Gummimischung von den Anteilen an diesen Kautschuken in der anderen Gummimischung pro Kautschuk um höchstens 6 phr abweichen.

4. Fahrzeugluftreifen nach einem der Ansprüche 1 bis 3, **dadurch gekennzeichnet, dass** die Gummimischung der Gummischichten (4) und die Gummimischung des Hauptteils (1a) Ruß und/oder Silika als Füllstoff(e) enthält bzw. enthalten, wobei der Anteil an Ruß und/oder Silika in der Gummimischung der Gummischichten (4) vom Anteil an Ruß und/oder Silika in der Gummimischung des Hauptteils (1a) pro Füllstoff um höchstens 6 phr abweicht.

5. Fahrzeugluftreifen nach einem der Ansprüche 1 bis 3, **dadurch gekennzeichnet, dass** die Gummimischung der Gummischichten (4) und die Gummimischung des Hauptteils (1a) Ruß und/oder Silika als Füllstoffe enthält bzw. enthalten, wobei sich diese Füllstoffe in der Gummimischung der Gummischichten (4) von jenen in der Gummimischung des Hauptteils (1a) in ihrer DBP-Zahl (Dibutylphthalat-Zahl) oder ihrer Jodabsorptionszahl um maximal 15 % unterscheiden.

6. Fahrzeugluftreifen nach einem der Ansprüche 1 bis 5, **dadurch gekennzeichnet, dass** die Gummischichten (4) am Nutgrund eine maximale Stärke von 4 mm aufweisen.

7. Fahrzeugluftreifen nach einem der Ansprüche 1 bis 6, **dadurch gekennzeichnet, dass** die Gummischichten (4) an den Nutflanken (2a) eine maximale Stärke von 6 mm aufweisen.

## Claims

1. Pneumatic vehicle tire, especially for utility vehicles, with a profiled tread (1) which is divided by a number of circumferential grooves (2) into profile ribs or block series (3) and which has a main part (1a) composed of a first rubber mixture and rubber layers (4) composed of a second rubber mixture which line at least the groove base (2b) of the circumferential grooves (2), the modulus of elasticity M 100% of the rubber mixture of the rubber layers (4) being 5% to 20% lower than the modulus of elasticity M 100% of the rubber mixture of the main part (1a) of the tread (1),
**characterized in that**
the rubber mixture of the rubber layers (4) and the rubber mixture of the main part (1a) are based on a substantially corresponding or comparable polymer system and have a substantially corresponding or comparable filler system.

2. Pneumatic vehicle tire according to Claim 1, **characterized in that** the modulus M 100% of the rubber mixture of the rubber layers (4) is 10 to 15% lower than that of the rubber mixture of the main part (1a) of the tread (1).

3. Pneumatic vehicle tire according to Claim 1 or 2, **characterized in that** the rubber mixture for the rubber layers (4) and the rubber mixture for the main part (1a) are based on one or more of the rubbers SBR, BR, NR/IR, and the proportions of these rubbers in one rubber mixture differ from the proportions of these rubbers in the other rubber mixture by at most 6 phr per rubber.

4. Pneumatic vehicle tire according to one of Claims 1 to 3, **characterized in that** the rubber mixture of the rubber layers (4) and the rubber mixture of the main part (1a) comprise(s) carbon black and/or silica as filler(s), the proportion of carbon black and/or silica in the rubber mixture of the rubber layers (4) differing from the proportion of carbon black and/or silica in the rubber mixture of the main part (1a) by at most 6 phr per filler.

5. Pneumatic vehicle tire according to one of Claims 1 to 3, **characterized in that** the rubber mixture of the rubber layers (4) and the rubber mixture of the main part (1a) comprise(s) carbon black and/or silica as filler(s), the DBP number (dibutyl phthalate number) or the iodine absorption number of said fillers in the rubber mixture of the rubber layers (4) differing from those in the rubber mixture of the main part (1a) by not more than 15%.

6. Pneumatic vehicle tire according to one of Claims 1 to 5, **characterized in that** the rubber layers (4) have a maximum thickness at the groove base of 4 mm.

7. Pneumatic vehicle tire according to one of Claims 1 to 6, **characterized in that** the rubber layers (4) have a maximum thickness on the groove flanks (2a) of 6 mm.

## Revendications

1. Bandage pneumatique pour roue de véhicule, en particulier pour véhicules utilitaires, qui présente
une bande de roulement (1) profilée divisée par plusieurs rainures périphériques (2) en nervures profilées ou rangées (3) de blocs et présentant une partie principale (1a) en un premier mélange de caoutchouc ainsi que des couches de caoutchouc (4) en un deuxième mélange de caoutchouc qui revêtent au moins le fond (2b) des rainures périphériques (2),
le module d'élasticité M à 100 % du mélange de caoutchouc des couches (4) de caoutchouc étant de 5 % à 20 % plus bas que le module d'élasticité M à 100 % du mélange de caoutchouc de la partie principale (1a) de la bande de roulement (1),
**caractérisé en ce que**
le mélange de caoutchouc des couches de caoutchouc (4) et le mélange de caoutchouc de la partie principale (1a) sont basés sur des systèmes de polymères qui se correspondent très largement ou sont très largement comparables et présentent des systèmes de charge qui se correspondent très largement ou qui sont très largement comparables.

2. Bandage pneumatique pour roue de véhicule selon la revendication 1, **caractérisé en ce que** le module M à 100 % du mélange de caoutchouc des couches (4) de caoutchouc est de 10 à 15 % plus bas que celui du mélange de caoutchouc de la partie principale (1a) de la bande de roulement (1).

3. Bandage pneumatique pour roue de véhicule selon les revendications 1 ou 2, **caractérisé en ce que** le mélange de caoutchouc des couches (4) de caoutchouc et le mélange de caoutchouc de la partie principale (1a) sont basés sur un ou plusieurs des caoutchoucs SBR, BR, NR/IR et **en ce que** les teneurs en ces caoutchoucs de l'un des mélanges de caoutchouc s'écartent d'au plus 6 phr par caoutchouc des teneurs en ces caoutchoucs de l'autre mélange de caoutchouc.

4. Bandage pneumatique pour roue de véhicule selon l'une des revendications 1 à 3, **caractérisé en ce que** le mélange de caoutchouc des couches (4) de caoutchouc et les mélanges de caoutchouc de la partie principale (1a) contiennent comme charges du noir de carbone et/ou de la silice, la teneur en noir de carbone et/ou en silice du mélange de caoutchouc des couches (4) de caoutchouc s'écartant d'au plus 6 phr par charge de la teneur en noir de carbone et/ou en silice du mélange de caoutchouc de la partie principale (1a).

5. Bandage pneumatique pour roue de véhicule selon l'une des revendications 1 à 3, **caractérisé en ce que** le mélange de caoutchouc des couches (4) de caoutchouc et le mélange de caoutchouc de la partie principale (1a) contiennent comme charges du noir de carbone et/ou de la silice, ces charges dans le mélange de caoutchouc des couches (4) de caoutchouc se distinguant d'au plus 15 % de celles du mélange de caoutchouc de la partie principale (1a) par leur indice DBP (indice de phtalate de dibutyle) ou par leur indice d'absorption d'iode.

6. Bandage pneumatique pour roue de véhicule selon l'une des revendications 1 à 5, **caractérisé en ce que** sur le fond des rainures, les couches de caoutchouc (4) présentent une épaisseur maximale de 4 mm.

7. Bandage pneumatique pour roue de véhicule selon l'une des revendications 1 à 6, **caractérisé en ce que** sur les flancs (2a) des rainures, les couches (4) de caoutchouc présentent une épaisseur maximale de 6 mm.
